# DEMANDE DE BREVET EUROPEEN

(11) **EP 1 413 486 A1**
(43) Date de publication de la demande: **28.04.2004**
(21) Numéro de dépôt: 03292547.1
(22) Date de dépôt: 14.10.2003
(51) Int. Cl.: B60R 16/02

(54) **Procédé de réalisation d'un faisceau de cablage notamment pour un véhicule**

(30) Priorité: 21.10.2002 FR 0213059
(71) Demandeur: Acome Société Cooperative De Travailleurs, 75008 Paris (FR)
(72) Inventeur: Racineux, Karine, 50600 Saint Hilaire du Harcouet (FR); Gobe, Michael, 61700 La Haute Chapelle (FR); Brault, Dominique, 50140 Mortain (FR); Le Noane, Georges, 50600 Virey (FR)
(74) Mandataire: Callon de Lamarck, Jean-Robert

(57) **Abrégé**

Le procédé de réalisation d'un faisceau de câblage (10), notamment pour un véhicule, présente les étapes consistant à :
- disposer des éléments filaires (6) sur un support (2) dans une configuration prédéterminée, pour former le faisceau ;
- fixer les éléments (6) les uns aux autres à des points discontinus (8) ; et
- ôter le faisceau (10) du support (2) en l'autorisant à se déformer.

## Description

L'invention concerne la réalisation des faisceaux de câblage, notamment pour véhicule, cette réalisation étant avantageusement effectuée par un robot.

Il s'agit par exemple des faisceaux de câblage logés dans les pavillons ou les portières du véhicule.

On connaît par exemple du document US-5 606 795 un procédé de réalisation d'un faisceau de câblage dans lequel on dispose des éléments filaires, préalablement coupés à longueur et sertis, sur un support dans une configuration prédéterminée pour former le faisceau, on fixe les éléments les uns par rapport aux autres en recouvrant l'ensemble du faisceau avec une bande adhésive puis on ôte le faisceau du support. Au moins certaines de ces étapes peuvent être mises en oeuvre par un robot.

Toutefois, un inconvénient de ce procédé est que la forme et les dimensions du faisceau, en dépit de sa relative souplesse, ne peuvent pas être adaptées dans une large mesure lors de la pose du faisceau sur son panneau de destination, par exemple si le volume ne correspond pas tout à fait à celui prévu ou encore si les dimensions du panneau ne sont pas tout à fait celles qui étaient attendues. En pratique, de nombreux problèmes de dernière minute tels que ceux-ci peuvent rendre souhaitable l'adaptation du faisceau.

Un but de l'invention est donc de fournir un procédé de réalisation d'un faisceau qui permette si nécessaire d'adapter en dernière minute et dans une large mesure la forme ou le volume du faisceau.

A cet effet, on prévoit selon l'invention un procédé selon la revendication 1.

Ainsi, les éléments du faisceau étant fixés les uns aux autres à des points discontinus, on accroît la souplesse du faisceau dont les éléments peuvent être fléchis davantage que lorsque le faisceau est intégralement recouvert d'un ruban adhésif. En outre, les différents éléments filaires peuvent être séparés les uns des autres localement entre deux points de fixation consécutifs pour adapter l'encombrement du faisceau en fonction du panneau de réception et par exemple pour rapprocher l'un de l'autre les deux points de fixation.

Le procédé selon l'invention pourra présenter en outre au moins l'une quelconque des caractéristiques énoncées aux revendications 2 à 13 :

On prévoit également selon l'invention un dispositif selon la revendication 14 .

Avantageusement, le dispositif comprendra des moyens automatisés pour monter au moins certains des éléments filaires dans au moins un connecteur.

De préférence, le dispositif selon l'invention sera agencé pour permettre la mise en oeuvre d'au moins l'une quelconque des caractéristiques préférentielles précitées relatives au procédé. Il s'agira de préférence d'un ou plusieurs robots.

On prévoit enfin selon l'invention un faisceau de câblage fabriqué au moyen du procédé de l'invention.

D'autres caractéristiques et avantages de l'invention apparaîtront encore dans la description suivante d'un mode préféré de réalisation et d'une variante donnés à titre d'exemples non limitatifs en référence aux dessins annexés :
- les figures 1 à 5 sont des vues schématiques en plan d'un support de travail au cours de cinq étapes successives respectives de la mise en oeuvre du procédé selon l'invention ;
- la figure 6 est une vue analogue à la figure 5 montrant un exemple d'adaptation du volume du faisceau ;
- la figure 7 est une vue en perspective d'une extrémité d'un des éléments filaires du faisceau des précédentes figures ; et
- la figure 8 est une vue en perspective d'une pièce de maintien des éléments filaires, dans une variante de mise en oeuvre de l'invention, deux des éléments filaires étant représentés en traits pointillés.

Dans le mode de mise en oeuvre qui va être décrit ci-après, le procédé de réalisation selon l'invention vise la fabrication d'un faisceau de câblage destiné à une partie d'un véhicule automobile telle qu'une portière ou un pavillon.

Dans le présent exemple, le faisceau est configuré sous la forme d'une nappe c'est-à-dire d'un ensemble d'éléments filaires s'étendant les uns à côté des autres dans un même plan afin de donner à la nappe une épaisseur réduite.

Le procédé selon l'invention est mis en oeuvre au moyen d'un support de travail 2 essentiellement horizontal.

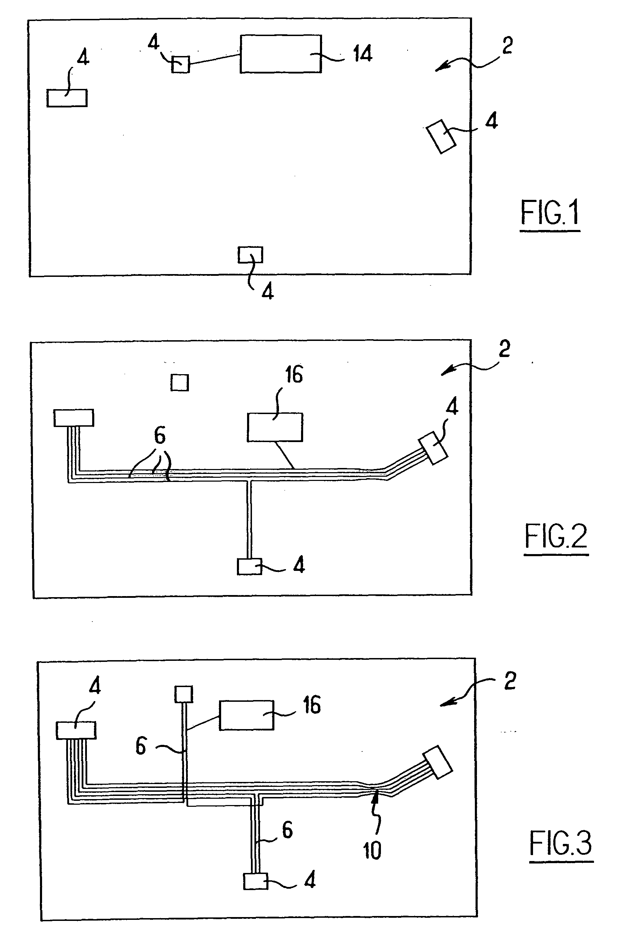

Dans une première étape, en référence à la figure 1, on dispose sur le support 2 des connecteurs 4 du faisceau. On immobilise provisoirement les connecteurs sur le support. Cette disposition est faite de sorte que les connecteurs 4 occupent des positions prédéterminées compatibles avec la configuration du faisceau tel qu'il sera fabriqué dans la suite. Les connecteurs permettront de connecter le faisceau électriquement aux autres parties du circuit ou des circuits (électriques et/ou optiques selon les cas) du véhicule une fois le faisceau en place dans le véhicule.

Les connecteurs 4 pourront être des connecteurs classiques de types variés. Sachant que les éléments filaires constituant le faisceau pourront être des câbles électriques ou des fibres optiques, les connecteurs pourront être des connecteurs électriques ou optiques. Plus précisément, il pourra s'agir de connecteurs à cosse, de connecteurs à déplacement d'isolant ou encore de connecteurs optiques.

Dans une deuxième étape du procédé, on dispose des éléments filaires 6 sur le support dans une configuration spatiale prédéterminée pour former le faisceau, comme cela a été représenté sur la figure 2.

Les éléments filaires pourront être de natures variées. Il pourra par exemple de s'agir de câbles électriques, de câbles mini co-axiaux, de fibres optiques, ou encore de faisceaux de câblage tels que des nappes constituées elles-mêmes de plusieurs éléments filaires.

Les éléments filaires 6, qu'ils soient ou non de même nature, pourront avoir des dimensions différentes, en particulier des longueurs différentes et des diamètres différents. Dans le présent mode de réalisation, les éléments filaires 6 comprennent plusieurs câbles électriques ayant des dimensions différentes entre eux et plusieurs fibres optiques ayant des dimensions différentes entre elles.

Chaque élément filaire 6 présente deux extrémités terminales 7. Lors de cette étape de mise en place, chacun des éléments filaires 6 a déjà été muni à au moins une de ses extrémités, et de préférence à chacune d'elles, d'une pièce de connexion 9 permettant son montage dans un des connecteurs 4 dans la position adaptée et de façon fonctionnelle. Cette pièce sera par exemple une cosse ou une férule d'un type classique.

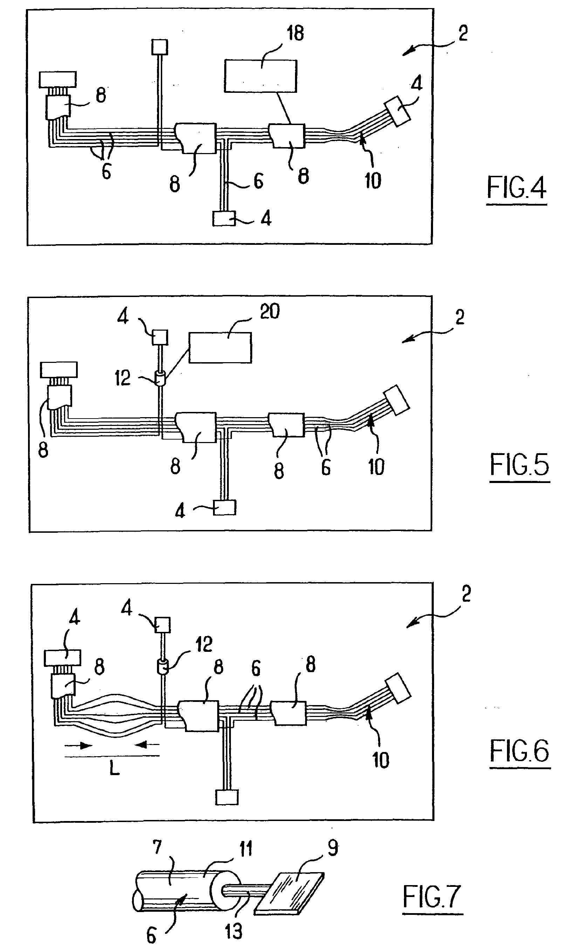

Dans un mode de réalisation préféré et en référence à la figure 7, chaque élément filaire a, préalablement à cette étape du procédé, été fabriqué par dévidage d'une bobine, coupe à la longueur requise, dénudage de l'isolant électrique 11 si l'élément filaire est un élément électrique, et pose (sur le conducteur électrique 13 le cas échéant) d'une pièce de connexion 9 adaptée. De plus, chacun des éléments filaires ainsi fabriqués en série a été stocké dans un endroit prédéterminé et précisément identifié quant à son type, à ses dimensions et à sa longueur, par exemple au moyen d'un code couleurs sur l'élément filaire. Ces étapes de fabrication préalables de chaque élément filaire pourront selon les cas être intégrées au procédé de fabrication du faisceau ou pas. Dans ce dernier cas, la fabrication du faisceau a donc lieu à partir de magasins renfermant des stocks des éléments filaires nécessaires. Dans le présent exemple, lors de l'étape de disposition des éléments filaires sur le support, chaque extrémité des éléments filaires munie de sa pièce de connexion est montée dans le connecteur qui lui est destiné comme illustré à la figure 2.

La figure 3 illustre une phase ultérieure de cette étape de disposition au cours de laquelle d'autres éléments filaires 6 sont disposés sur le support et connectés par leurs extrémités aux connecteurs 4 de destination, ces éléments filaires constituant ici une dérivation par rapport au faisceau partiellement constitué par les éléments déjà installés.

Dans une troisième étape, illustrée sur la figure 4, on fixe les éléments filaires les uns aux autres en constituant des points de fixation discontinus à différents endroits du faisceau. En l'espèce, trois points de fixation 8 ont été constitués sur le faisceau 10. Cette fixation est ici mise en oeuvre en noyant localement certains des éléments filaires du faisceau dans une matière de fixation durcissable, par exemple une résine injectée.

Une fois durcie, les points de fixation 8 ont plusieurs fonctions. Ainsi, une fonction principale de ces points de fixation est de maintenir localement la disposition des éléments filaires constituant le faisceau les uns par rapport aux autres. De cette façon, en dépit du fait que le faisceau pourra, une fois ôté du support, être déformé à loisir, la configuration dans laquelle il a été fabriqué pourra être très facilement reconstituée. Cette configuration est précisément adaptée à la configuration que doit avoir le faisceau une fois installé sur son panneau de destination, et dans certains cas sera exactement la même.

Par ailleurs, ces points de fixation 8 assurent au moins localement une protection du faisceau à l'égard des vibrations et des frottements. Suivant la nature de la matière employée pour constituer ces points de fixation, ils peuvent également assurer une fonction d'étanchéité, notamment à l'eau.

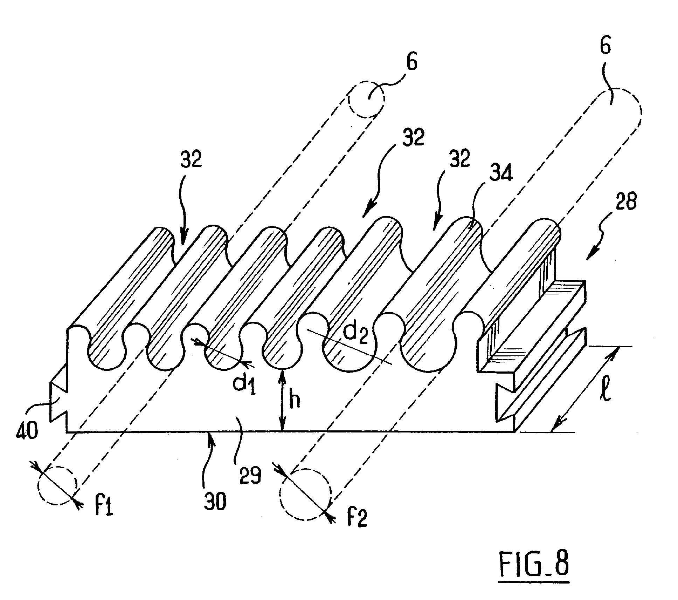

Dans une variante de réalisation, les fils de la nappe sont maintenus les uns aux autres et fixés à leur environnement de destination au moyen de plusieurs pièces de maintien 28 telles que celle illustrée à la figure 8 et préalablement fournies. Nous allons maintenant décrire en détails cette pièce de maintien.

La pièce 28 est réalisée en un matériau électriquement isolant tel qu'une matière synthétique, par exemple une matière plastique ou un élastomère.

La pièce 28 comporte une base 29 ayant une forme générale de parallélépipède rectangle. Cette base présente une face principale inférieure plane 30 destinée en général à servir de face de contact de la pièce avec son environnement de destination.

La pièce 28 comporte au-dessus de la base 29 des canaux rectilignes allongés 32 s'étendant parallèlement les uns aux autres dans un même plan parallèle à celui de la base. Chaque canal présente une ouverture supérieure s'étendant sur toute la longueur du canal. Cette ouverture s'étend du côté du canal opposé à la base. Les canaux sont délimités chacun par des parois 34 dont la plupart sont communes à deux canaux contigus. Le bord supérieur libre de chaque paroi présente un bourrelet profilé au niveau duquel l'épaisseur de la paroi augmente. Chaque canal débouche aux faces avant et arrière du support.

Chaque canal 32 est profilé et présente une section transversale à son axe longitudinal de forme générale en « U ». Précisément, les canaux présentent en section transversale un profil en arc de cercle s'étendant sensiblement sur deux tiers ou trois quarts de tour, donnant au fond de chaque canal une forme cylindrique.

Les canaux forment des logements pour les éléments filaires 6 respectifs. L'ouverture supérieure des canaux permet d'introduire chaque élément filaire dans son canal de destination par un mouvement de haut en bas c'est-à-dire suivant une direction radiale à un axe longitudinal du canal et de l'élément filaire, et de l'en extraire par un mouvement inverse.

On prévoira de préférence que la matière constituant la pièce 28 présente une certaine élasticité, ce qui permet à un même canal compte tenu de la présence des bourrelets d'accueillir suivant les cas des fils d'épaisseurs respectives légèrement différentes l'une de l'autre. En d'autres termes, une même pièce pourra servir à maintenir des fils de fort diamètre, et/ou des fils de faible diamètre en fonction des circonstances, par exemple en transmission de données ou transport de puissance en fonction de l'application utilisée dans le véhicule de destination sur lequel il est embarqué.

Par ailleurs, on remarque que, parmi les six canaux 32 de la pièce 28 de la figure 8, les quatre canaux se trouvant le plus à gauche présentent des dimensions transversales identiques entre eux et inférieures aux dimensions transversales des deux canaux les plus à droite. En l'espèce, les quatre canaux de gauche présentent un même diamètre d1 sensiblement inférieur au diamètre d2 des deux canaux les plus à droite. Ainsi, cette pièce sera particulièrement adaptée à recevoir une nappe de fils constituée d'une part de quatre fils de diamètre f1 sensiblement égal au diamètre d1 et de deux fils de diamètre f2 sensiblement égal au diamètre d2.

Les diamètres d1 et d2 des canaux de chaque pièce de maintien 28 sont prévus pour être légèrement supérieurs aux diamètres f1 et f2 respectifs des fils qu'elles sont destinées à recevoir de façon à faciliter le glissement de chaque fil dans le canal qui le maintient en ménageant un jeu adapté.

La base 29 de chaque pièce présente une hauteur h, mesurée entre la face inférieure 30 et le fond du canal 32 le plus proche de cette face, supérieure à la dimension transversale des fils 6 ou à la plus grande dimension transversale des fils 6 lorsque ceux-ci ont des épaisseurs différentes. De la sorte, il est possible pour un fil 6 de la nappe qui est séparé des autres fils sur un tronçon de la nappe de s'étendre au-dessous des autres fils sans générer de surépaisseur à l'endroit de ce passage.

La face gauche de la pièce 28 présente une partie mâle profilée 40 à section trapézoïdale pour un assemblage en queue d'aronde tandis que la face droite de la pièce 28 présente une partie femelle ayant un profil et une forme similaires et complémentaires afin de permettre la fixation de deux pièces contigues 28 au moyen d'un assemblage mâle/femelle de ces deux parties suivant la direction longitudinale des canaux. Il est donc possible à partir de deux pièces 28 comprenant un nombre réduit de canaux de former une seule pièce présentant un nombre de canaux plus élevé. Par ailleurs, il est possible de relier par l'intermédiaire de leurs pièces 28 de cette façon plusieurs nappes destinées à s'étendre côte à côte sur toute ou partie de leur trajectoire. Naturellement, ces moyens de fixation permettent un montage et un démontage à volonté.

Une quatrième étape de la mise en oeuvre du procédé est illustrée à la figure 5. Elle consiste à mettre en place un organe d'étanchéité 12 à au moins un endroit prédéterminé du faisceau. L'ajout d'une telle pièce est destiné par exemple à permettre le passage du faisceau à travers une cloison étanche une fois installé à bord du véhicule. Alternativement, pourront être installés sur le faisceau au cours de cette étape d'autres organes tel qu'un organe destiné à la fixation du faisceau sur le panneau de destination, un organe destiné à assurer un bon vieillissement du faisceau au sein du panneau ou encore un organe protégeant le faisceau à l'égard des vibrations ou constituant une protection acoustique. A l'issue de cette étape, le faisceau 10 est achevé.

Sachant que les éléments filaires constituant le faisceau sont fixés les uns aux autres seulement en des points discontinus, le faisceau présente une grande souplesse et peut être déformé dans une large mesure, notamment une fois ôté du support. En référence à la figure 6, on a illustré à titre d'exemple un cas où l'on souhaite rapprocher l'un de l'autre deux points de fixation 8 successifs séparés initialement par une distance L. La faculté de déformer les tronçons des éléments filaires reliant ces deux points permet de les rapprocher. Une telle déformation peut par exemple être requise lors du montage ultérieur du faisceau sur une portière de véhicule. Cette souplesse peut également être mise en oeuvre pour permettre un enroulement de tout ou partie du faisceau, que ce soit en préalable à son installation sur le panneau ou une fois le faisceau installé sur le panneau.

A l'issue de la fabrication du faisceau, on ôte le faisceau du support 2, ce qui permet au faisceau de se déformer spontanément. Le faisceau peut être ainsi stocké et transporté dans une configuration différente de celle qu'il occupait sur le support 2. Ultérieurement, le faisceau sera monté sur son panneau de destination. L'opérateur pourra facilement retrouver la configuration que le faisceau occupait lors de sa fabrication grâce aux points de fixation 8.

Au moins certaines des étapes du procédé qui vient d'être décrit, et de préférence toutes, pourront être mises en oeuvre de façon automatisée par un ou plusieurs robots. Le ou chaque robot comprendra en particulier des moyens 14 tels qu'un bras articulé, ou un système guidé sur un, deux ou trois axes tel que celui commercialisé par la société Samsung sous la référence RCM4 illustrés schématiquement à la figure 4, pour disposer les connecteurs 4 sur le support 2, des moyens 16 éventuellement confondus avec les moyens 14 pour fixer les éléments filaires 6 dans la configuration prédéterminée sur le support comme illustré aux figures 2 et 3, des moyens 18 pour constituer les points de fixation 8 (par exemple des moyens d'injection de résine) et des moyens 20 pour fixer au faisceau des organes particuliers tels que l'organe 12. Le robot pourra comprendre avantageusement des moyens pour monter certains au moins des éléments filaires dans au moins un connecteur. Le robot comprendra enfin des moyens non illustrés aptes à ôter le faisceau du support en l'autorisant à se déformer. Il existe dans le commerce des robots qui peuvent être facilement adaptés pour permettre la mise en oeuvre du procédé comme on vient de le décrire. On pourra par exemple utiliser le matériel commercialisé par la société Stäubli et constitué par un bras de robot polyarticulé à six axes ayant pour référence RX90B L et une baie de commande ayant pour référence CS8 formant une armoire de gestion du bras et comprenant un ordinateur formant un contrôleur.

De préférence, on pourra prévoir plusieurs supports 2 associés chacun à un ou plusieurs robots pour la fabrication de faisceaux en vue d'une grande cadence de réalisation des faisceaux.

Le procédé selon l'invention permet de réaliser des modules de câblage à terminaisons multiples particulièrement économiques et ayant d'excellentes caractéristiques de souplesse permettant leur montage sur des parties de véhicule automobile. De plus, le procédé selon l'invention permet d'inclure dans un même faisceau des éléments filaires de différentes sections et de différents types. L'invention permet l'introduction dans le faisceau d'éléments particuliers de transmission particulièrement insensibles aux perturbations électromagnétiques ainsi que l'usage de différents types de terminaisons pour les éléments filaires. De plus, les éléments de protection mécaniques anti-vibratoires ou d'étanchéité peuvent être mis en place sur le faisceau seulement aux endroits concernés par cette protection.

Le procédé selon l'invention peut être mis en oeuvre en faisant disparaître quasi totalement la main d'oeuvre qui était traditionnellement nécessaire pour la réalisation des faisceaux. La préparation des éléments filaires avec leurs pièces de connexion au cours d'une étape préalable à la mise en place des éléments filaires sur le support permet une fabrication particulièrement économique.

Grâce au caractère discontinu sur le faisceau des points de fixation des éléments filaires entre eux, l'encombrement de l'ensemble du faisceau est réduit et sa souplesse se trouve augmentée. De plus, le faisceau est plus léger que les faisceaux antérieurs. La configuration du faisceau sous la forme d'une nappe permet de réduire d'autant le volume occupé par le faisceau. Le procédé qui vient d'être décrit permet d'allier les qualités des câblages de type flex, c'est-à-dire des câblages plats, en intégrant en quelque sorte le coût de réalisation de tels câbles à l'opération de fabrication du faisceau. Par ailleurs, le faisceau selon l'invention permet de réaliser de multiples dérivations tout en obtenant des coûts de câblage relativement bas sans avoir recours nécessairement à de la main d'oeuvre. Comme on le sait, les câbles plats ou câbles « flex » présentent l'avantage d'être peu encombrants dans une dimension et d'être bien adaptés à des fonctions d'enroulement comme dans un dispositif d'airbag (ou coussin gonflable) par exemple.

Bien entendu, on pourra apporter à l'invention de nombreuses modifications sans sortir du cadre de celle-ci défini par les revendications annexées.

L'invention est applicable aux faisceaux autres que les nappes, en particulier ceux dont les éléments filaires sont groupés de façon non plane.

## Revendications

1. Procédé de réalisation d'un faisceau de câblage (10), notamment pour un véhicule, **caractérisé en ce qu'**il présente les étapes consistant à :
- disposer des éléments filaires (6) sur un support (2) dans une configuration prédéterminée, pour former le faisceau ;
- fixer les éléments (6) les uns aux autres à des points discontinus (8) ; et
- ôter le faisceau (10) du support (2) en l'autorisant à se déformer.

2. Procédé selon la revendication 1, **caractérisé en ce que**, chaque élément filaire (6) présentant deux extrémités, l'étape de disposition est mise en oeuvre avec les éléments filaires munis chacun à au moins une de leurs extrémités d'une pièce de connexion permettant son montage dans un connecteur (4).

3. Procédé selon l'une quelconque des revendications précédentes **caractérisé en ce qu'**il comprend l'étape de monter au moins certains des éléments filaires (6) dans au moins un connecteur (4).

4. Procédé selon l'une quelconque des revendications précédentes, **caractérisé en ce qu'**il comprend l'étape préalable consistant à disposer au moins un connecteur (4) sur le support (2), les éléments filaires (6) étant ensuite disposés sur le support en montant au moins certains des éléments filaires à ou aux connecteurs (4).

5. Procédé selon l'une quelconque des revendications 3 à 4 **caractérisé en ce que** le ou chaque connecteur (4) est choisi dans le groupe constitué par: les connecteurs à cosse, les connecteurs à déplacement d'isolant et les connecteurs optiques.

6. Procédé selon l'une quelconque des revendications précédentes, **caractérisé en ce que** l'étape de fixation est mise en oeuvre en noyant les éléments (6) localement dans une matière de fixation, par exemple une résine.

7. Procédé selon l'une quelconque des revendications précédentes, **caractérisé en ce que** l'étape de fixation est mise en oeuvre en fournissant des pièces de maintien (28) et en fixant les éléments filaires (6) aux pièces de maintien.

8. Procédé selon l'une quelconque des revendications précédentes, **caractérisé en ce qu'**il comprend l'étape consistant à fixer au faisceau (10) au moins un organe (12) choisi dans le groupe constitué par :
- un organe d'étanchéité en vue du passage du faisceau à travers une cloison ;
- un organe anti-vibratoire ; et
- un organe de protection acoustique.

9. Procédé selon l'une quelconque des revendications précédentes, **caractérisé en ce que** le faisceau (10) est une nappe.

10. Procédé selon l'une quelconque des revendications précédentes, **caractérisé en ce qu'**au moins deux des éléments (6) sont de natures différentes l'un de l'autre.

11. Procédé selon l'une quelconque des revendications précédentes, **caractérisé en ce qu'**au moins deux des éléments (6) sont de dimensions différentes l'un de l'autre.

12. Procédé selon l'une quelconque des revendications précédentes, **caractérisé en ce que** les éléments filaires (6) sont choisis dans le groupe constitué par : les câbles électriques, les câbles mini co-axiaux, les fibres optiques ou les faisceaux de câblage.

13. Procédé selon l'une quelconque des revendications précédentes, **caractérisé en ce qu'**au moins certaines des étapes du procédé sont mises en oeuvre par un ou plusieurs robots (14, 16, 18, 20).

14. Dispositif, notamment formé par un ou plusieurs robots, de réalisation d'un faisceau de câblage, notamment pour un véhicule, **caractérisé en ce qu'**il comprend :
- des moyens (16) pour disposer des éléments filaires (6) sur un support (2) dans une configuration prédéterminée pour former le faisceau ;
- des moyens (18) pour fixer les éléments (6) les uns aux autres à des points discontinus (8) ; et
- des moyens pour ôter le faisceau (10) du support en l'autorisant à se déformer.

15. Dispositif selon la revendication précédente, **caractérisé en ce qu'**il comprend des moyens automatisés pour monter au moins certains des éléments filaires (6) dans au moins un connecteur (4).

16. Dispositif selon la revendication précédente **caractérisé en ce qu'**il est agencé pour la mise en oeuvre d'un procédé conforme à l'une quelconque des revendications 2 à 13.

17. Faisceau de câblage (10) **caractérisé en ce qu'**il a été fabriqué au moyen du procédé selon l'une quelconque des revendications 1 à 13.
